# EUROPÄISCHE PATENTSCHRIFT

(11) **EP 2 059 696 B1**
(45) Veröffentlichungstag und Bekanntmachung des Hinweises auf die Patenterteilung: **12.03.2014**
(21) Anmeldenummer: 07818026.2
(22) Anmeldetag: 15.08.2007
(51) Int. Cl.: F16J 15/00, F16J 15/40, B67C 3/22

(54) **DICHTANORDNUNG FÜR EINE DREHLAGERVORRICHTUNG**
SEALING ARRANGEMENT FOR A PIVOT BEARING DEVICE
DISPOSITIF DE JOINT DESTINÉ À UN DISPOSITIF DE PALIER ROTATIF

(30) Priorität: 17.08.2006 DE 102006038747
(43) Veröffentlichungstag der Anmeldung: 20.05.2009
(73) Patentinhaber: KHS GmbH, 44143 Dortmund (DE)
(72) Erfinder: NEUMANN, Bernd, 22159 Hamburg (DE); BESTMANN, Matthias, 22457 Hamburg (DE)
(86) Internationale Anmeldenummer: PCT/EP2007/007191
(87) Internationale Veröffentlichungsnummer: WO 2008/019831

(56) Entgegenhaltungen:
- DE-B- 1 144 873
- DE-U1- 29 620 323
- US-A- 4 222 575
- US-A1- 2004 227 302

## Beschreibung

Die Erfindung betrifft einen Drehverteiler für eine Drehlagervorrichtung mit einem feststehenden und einem rotierenden Teil.

Derartige Drehlagervorrichtungen kommen beispielsweise in Behälter-, Behandlungs- und Befüllungsmaschinen mit Getränken, Arzneimitteln und dgl. zum Einsatz. Über eine derartige Drehlagervorrichtung wird der rotierende Teil einer derartigen Anlage mit dem feststehenden Teil drehbar verbunden. Je nach Ausgestaltung der Maschine müssen derartige Drehlagervorrichtungen unterschiedliche Anforderungen erfüllen können.

Bei einer wichtigen Anwendung, dient die Drehlagervorrichtung nicht nur zur Lagerung des rotierenden Teils der Maschine, sondern zusätzlich dazu, flüssige oder gasförmige Güter in den rotierenden Teil der Maschine zu übertragen. Dazu kommen sogenannte Drehverteiler zum Einsatz, mit denen beispielsweise ein Füllgut, das über eine Leitung an die Maschine gebracht wird, in den drehbaren Teil der Maschine geleitet und dort über eine Mehrzahl von Füllstationen in durch die Anlage laufende Behälter gefüllt wird.

Zusätzlich oder alternativ gibt es Anwendungsmöglichkeiten, bei denen Bereiche der Maschine in dem sich auch rotierende Teile befinden können, weitgehend von der Umgebung abgeschirmt sind. Dies geschieht dadurch, dass diese Teile der Maschine von einer Einhausung umgeben sind, deren Inneres nur über definierte Wege zugänglich ist. So kann das Innere der Einhausung z. B. praktisch keimfrei gehalten werden, um eine aseptische Behandlung und Befüllung von beispielsweise Getränkebehältern oder Arzneimittelbehältern zu ermöglichen. Bei derartigen Anwendungsfällen ist es nötig, dass auch die Drehverbindungen derartig ausgestaltet sind, dass keine unerwünschten Substanzen ins Innere der Einhausung gelangen können.

Aus der DE 296 20 323 U1 Ist einen Drehverteiler bekannt, bei welchem eine Reinigungsflüssigkeit in den inneren Ringraum geleitet wird, der von einer Ringdichtung geformt und dreiseitig umschlossen wird. Die Dicht- oder Sperrflüssigkeit wird dabei radial von außen kommend der jeweiligen Dichtung zugeführt und radial nach außen abgeleitet und dem nachfolgenden inneren Ringraum einer Dichtung zugeleitet. Zwischen jedem ringförmigen Fluidkanal oder angrenzend zur zentralen Produktzuführung sind diese Rinddichtungen mit je einem inneren Ringkanal vorgesehen.

Herkömmliche Dichtsysteme für Drehlagervorrichtungen erfüllen oftmals nicht die hierzu nötigen Anforderungen an die Dichtigkeit und Langzeitbeständigkeit der Abdichtung. Zudem ist die Wartung und Inspektion der herkömmlichen Dichtsysteme aufwändig und kompliziert und erfordert üblicherweise die Zerlegung der entsprechenden Verbindung, um festzustellen, ob eine Dichtung noch ausreichend funktionsfähig ist. Dichtungsfehlfunktionen lassen sich zudem regelmäßig erst dann erkennen, wenn eine Kontamination des Reinraumbereiches bereits weit fortgeschritten ist, so dass möglicherweise große Teile der hierin behandelten Behälter inzwischen unbrauchbar geworden sind.

Die Erfindung soll eine Dichtanordnung zur Verfügung stellen, die langlebig ist und eine sichere Dichtfunktion gewährleistet.

Die Erfindung erreicht dies durch einen Drehverteiler mit den Merkmalen des Patentanspruches 1.

Die Vorsehung zweier voneinander beabstandeter Dichtungen erhöht bereits die Sicherheit der Abdichtung. Dadurch, dass zwischen den Dichtungen zusätzlich eine Klammer zur Aufnahme eines Barrieremediums angeordnet ist, kann ein Durchdringen einer unerwünschten Substanz von einer Seite der Dichtanordnung auf die andere zuverlässig verhindert werden. Zur Überwindung der gesamten Dichtanordnung müsste die Substanz, nachdem sie den ersten Dichtungsring durchdrungen hat, ebenfalls durch die Kammer mit dem Barrieremedium gelangen. Je nach Ausgestaltung der Erfindung verhindert dieses ein Durchtreten auf unterschiedliche Weise. In Ausgestaltung kann das Barrieremedium beispielsweise einen Überdruck im Vergleich zu den an die Dichtanordnung angrenzenden Bereichen aufweisen. Auf diese Weise wird das Eindringen von unerwünschten Substanzen in die Dichtanordnung selbst bereits zuverlässig verhindert, da im Falle von Undichtigkeiten einer der beiden Dichtungen das Barrieremedium durch die Dichtung gedrückt wird und so keine unerwünschte Substanz die Dichtung durchdringen kann.

In anderer Ausgestaltung kann das Barrieremedium auch einen geringeren Druck als die Umgebung aufweisen und zweckmäßigerweise über ein oder mehrere Zugänge mit einer Versorgungseinrichtung verbunden sein. Sollte eine Verunreinigung durch eine Dichtung in die Kammer gelangen, wird diese in die Versorgungseinrichtung abgesaugt werden und könnte so nicht die Dichtanordnung durchdringen.

ist in der Kammer oder einer damit verbundenen Versorgungseinrichtung eine Drucküberwachung vorgesehen, können in beiden Fällen Undichtigkeiten frühzeitig erkannt werden, da entweder ein Druckabfall oder ein Druckanstieg in der Kammer mit dem Barrieremedium bei einer Undichtigkeit einer der beiden Dichtungen auftritt und gemessen werden kann.

Als Barrieremedium kommen Flüssigkeiten oder Gase in Betracht, die je nach Anwendung sterilisierende Eigenschaften aufweisen können, um beispielsweise bei Reinraumanwendungen selbst im Fall eines Eindringens von Keimen in die Kammer diese sofort abzutöten, so dass keine Verunreinigung mit biologisch aktiven Substanzen im Reinraum auftreten kann.

Bei einem erfindungsgemäßen Drehverteiler sind zwischen den einzelnen Verteilerkammern jeweils erfindungsgemäße Dichtanordnungen vorgesehen. Die Verteilerkammern sind üblicherweise im Wesentlichen ringförmig, zwischen dem feststehenden und dem rotierenden Teil des Drehverteilers angeordnet und weisen einen Zugang nach außen am feststehenden Teil auf, durch den eine flüssige oder gasförmige Substanz in den Ringraum geleitet wird. Dieser weist wiederum im rotierenden Teil eine oder mehrere rohrförmige Verbindungen mit einem oder ggf. beiden freistehenden Enden des rotierenden Teils auf. So können die im feststehenden Teil eingeleiteten Substanzen durch den Ringraum an Zugänge am rotierenden Teil geleitet und dort entnommen werden. Selbstverständlich kann der Transport auch in Gegenrichtung erfolgen. Bei vielen Anwendungen werden mit einem derartigen Drehverteiler eine Mehrzahl von unterschiedlichen Stoffen vom feststehenden in den rotierenden Teil des Verteilers geleitet. Hierzu sind in axialer Richtung mehrere ringförmige Kammern nebeneinander angeordnet und jeweils mit einem oder mehreren Anschlüssen auf der festen Seite und dem rotierenden Teil ausgestattet. Diese sind aus Platzgründen meist sternförmig um den Verteiler herum angeordnet. Zur Abdichtung der unterschiedlichen Verteilerringräume untereinander ist zwischen diesen jeweils mindestens eine erfindungsgemäße Dichtananordnung vorgesehen. Auf diese Weise kann zuverlässig verhindert werden, dass Substanzen von einem Ringraum in den anderen gelangen und Vermischungen der jeweiligen Substanzen stattfinden.

In einer Ausgestaltung ist es möglich, dass zwischen zwei ringförmigen Verteilerkammern zwei oder mehr Dichtanordnungen vorgesehen sind, zwischen denen jeweils eine weitere Leerkammer vorgesehen ist, die in Ausgestaltung ebenfalls eine Verbindung mit der Außenseite haben kann. Auf diese Weise lassen sich Leckagen frühzeitig erkennen, da dann etwas von dem Barrieremedium oder eine Mischung aus Barrieremedium und der in der angrenzenden Verteilerkammer befindlichen Substanz in den Leerraum eindringen und über den Zugang von außen erkannt werden können.

In einer weiteren Ausgestaltung eines erfindungsgemäßen Drehverteilers können alle oder einige der Kammern mit dem Barrieremedium untereinander verbunden sein und sich so gemeinsame Zu- und Abläufe für das Barrieremedium teilen, um die Zahl der Anschlüsse zu vermindern. Auch wenn unterschiedliche Barrieremedien in unterschiedlichen Teilen der Dichtanordnung verwendet werden, können so zumindest einige der Kammern miteinander verbunden werden.

Diese und weitere vorteilhafte Ausgestaltungen der Erfindung ergeben sich aus den Unteransprüchen, die hiermit zum Gegenstand der Beschreibung gemacht werden.

Die Erfindung ist anhand einer Zeichnung näher dargestellt. Diese zeigt in
- Fig. 1: eine geschnittene Seitenansicht einer Drehvorrichtung mit der erfindungsgemäßen Dichtanordnung,
- Fig. 2: eine teilweise vergrößerte Ansicht in einer anderen Schnittebene der Drehvorrichtung nach Fig. 1,
- Fig. 3: einen Schnitt durch einen erfindungsgemäßen Drehverteiler in einer ersten Schnittebene,
- Fig. 4: einen Schnitt durch den Drehverteiler in Fig. 3 in einer zweiten Schnittebene,
- Fig. 5: einen Schnitt durch den Drehverteiler gemäß Fig. 3 in einer dritten Schnittebene, sowie in

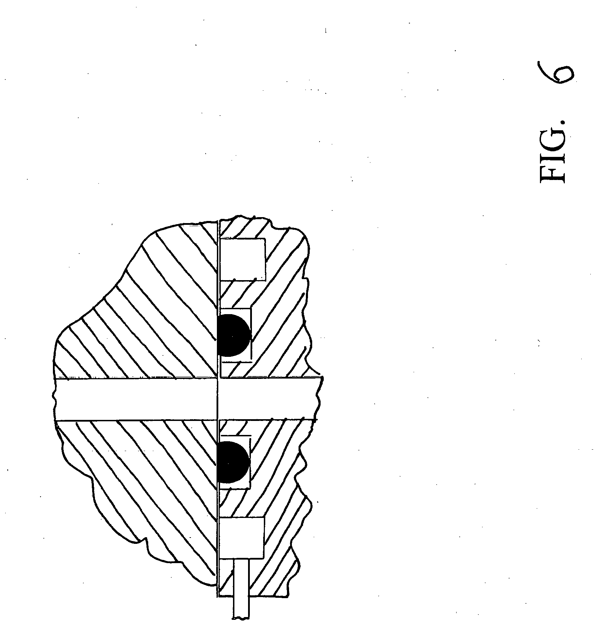

- Fig. 6: eine eigenständige, weitere Ausgestaltung der vorliegenden Erfindung.

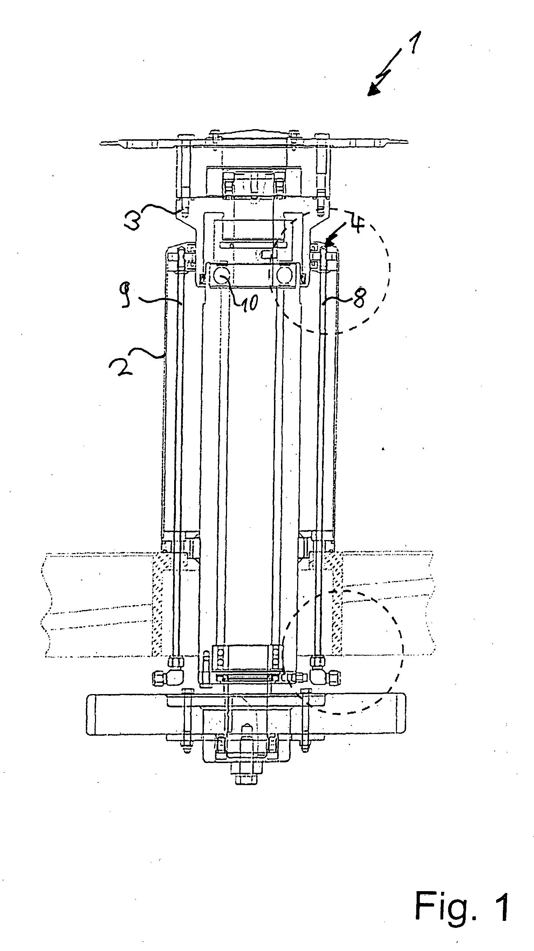

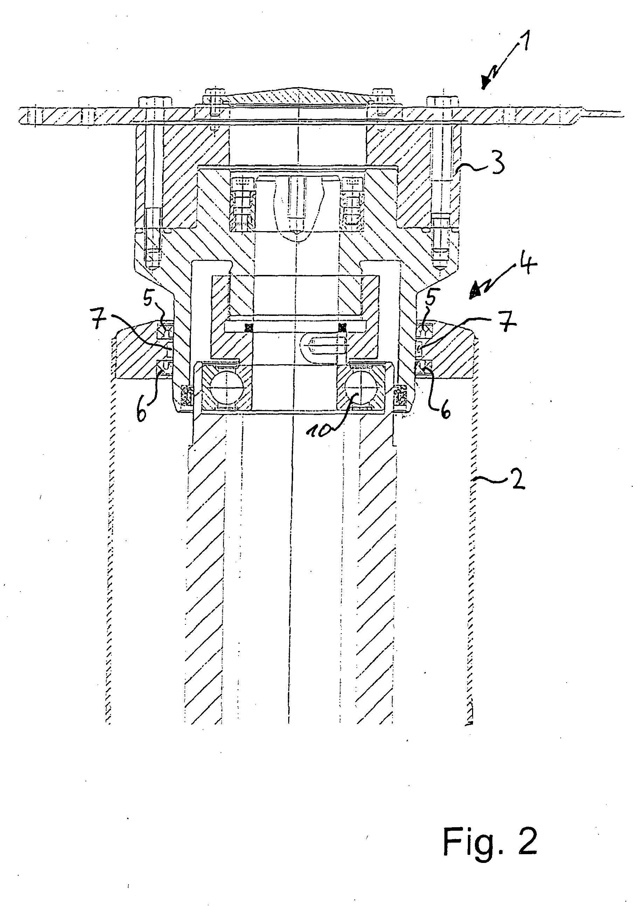

Eine allgemein mit 1 bezeichnete Drehlagervorrichtung ist in Fig. 1 näher dargestellt. Sie weist einen feststehenden Teil 2 und einen rotierenden Teil 3 auf. Die Drehlagervorrichtung 1 dient beispielsweise als Träger für eine Behälterbehandlungsmaschine in einer aseptischen Füllanlage. Der rotierende Teil 3 wird über eine nicht näher dargestellte Antriebseinrichtung gedreht. Zwischen dem feststehenden Teil 2 und dem rotierenden Teil 3 ist eine erfindungsgemäße Dichtanordnung 4 angeordnet, die in Fig. 2 näher dargestellt ist.

Der Drehverteiler mit seiner erfindungsgemäße Dichtanordnung 4 weist zwischen dem feststehenden Teil 2 und dem rotierenden Teil 3 eine erste Dichtung 5 und eine zweite Dichtung 6 auf, die in Form von Dichtringen am rotierenden Teil 3 dicht anliegen, Zwischen den beiden Dichtungen 5 und 6 befindet sich eine ringförmige Kammer 7, die ein Barrieremedium enthält. Dieses wird über eine Zugangsleitung 8 in die Kammer 7 eingebracht und kann durch eine Abflussleitung 9 aus der Kammer abfließen, so dass eine Zirkulation möglich ist. Zufluss 8 und Abfluss 9 sind mit einer Versorgungseinheit verbunden, die das Barrieremedium, z. B. eine 15 %-ige H₂O₂-Lösung, unter Überdruck in die Kammer presst und die Einhaltung des Druckes überwacht. Bei einer Undichtigkeit einer der beiden Dichtungen 5 bzw. 6 wird ein Druckabfall registriert und ein entsprechendes Wartungssignal wird ausgelöst.

Durch diese Dichtung wird wirksam, das Eindringen unerwünschter Substanzen, beispielsweise von Schmiermittel, aus dem Lager 10 in den Bereich des rotierenden Teils 3 verhindert. So ist es möglich, dass dieser Teil in einer aseptischen Umgebung angeordnet ist und so die Verunreinigungen oder das Eindringen von Keimen und dgl. In diesen Teil der Anlage durch die Dichtungsanordnung 4 verhindert wird. Sollte tatsächlich eine der beiden Dichtungen 5 oder 6 undicht werden, wird durch das unter Druck in der Kammer 7 befindliche Barrieremedium, das, wie ausgeführt, sterilisierende Eigenschaften aufweist, zumindest eine Verunreinigung mit Keimen verhindert, da diese einerseits durch das unter Druck stehende Barrieremedium nicht durch die Dichtungsanordnungen hindurchtreten können und andererseits unmittelbar beim Kontakt mit dem Medium abgetötet werden.

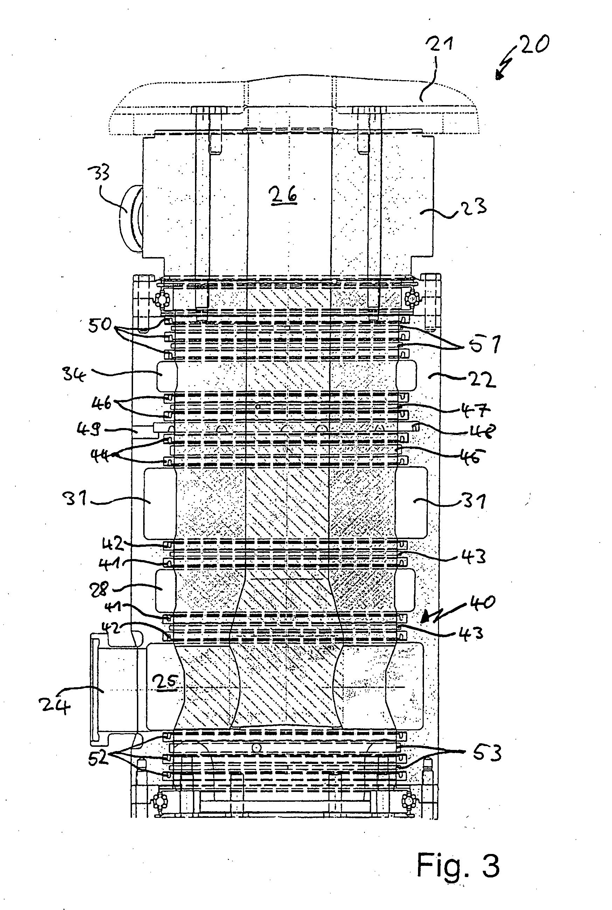

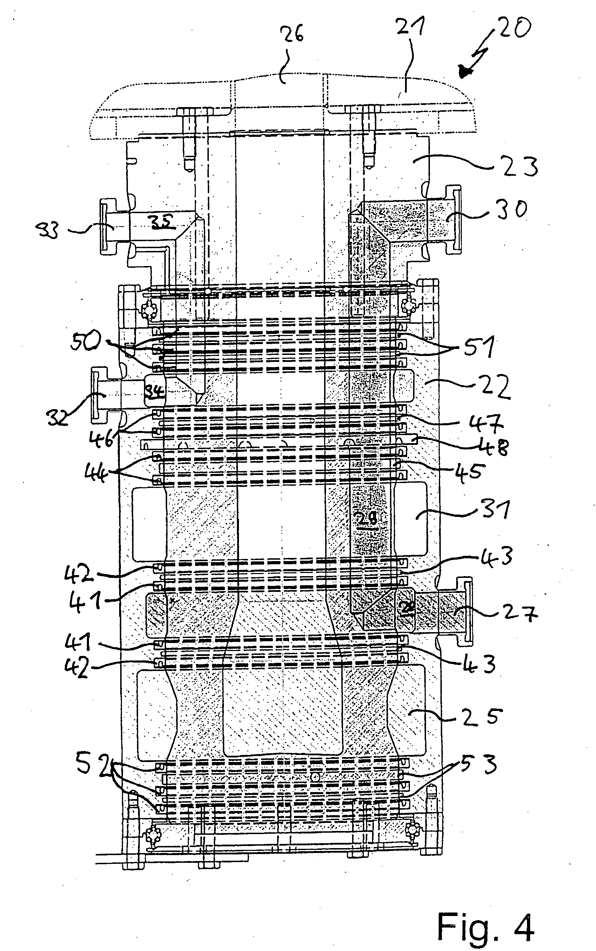

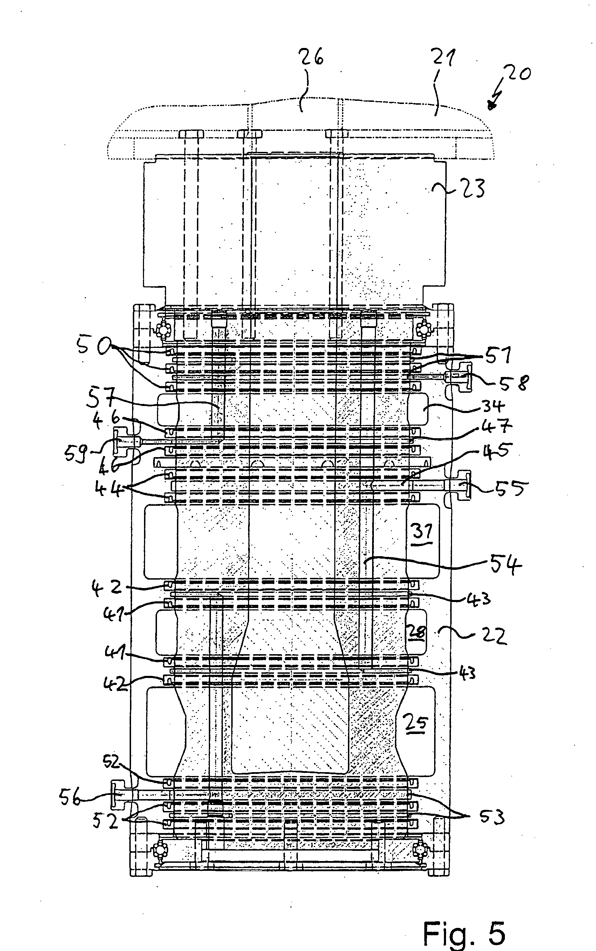

Ein erfindungsgemäßer Drehverteiler 20 ist in den Figuren 3 bis 5 näher dargestellt. Er kommt belspielsweise in einer nicht näher dargestellten Getränkebehälterfüllungsanlage zum Einsatz. Dabei weist er ebenfalls einen feststehenden Teil 22 und einen rotierenden Tell 23 auf. Er dient einerseits dazu, die rotierende Grundplatte 21 der Füllanlage zu tragen und andererseits dazu flüssige und gasförmige Medien vom feststehenden Bereich der Anlage an den rotierenden Teil zu leiten.

So wird das einzufüllende Gut durch den ersten Anschluss 24 in einen im Wesentlichen ringförmigen Ringraum 25 geleitet, die im feststehenden Teil 22 und an korrespondierender Position im rotierenden Teil 23 des Drehverteilers 20 angeordnet ist. Im rotierenden Teil 23 des Verteilers sind mehrere Verbindungen zwischen dem ringförmigen Raum 25 und dem hohlen Mittelteil 26 des rotierenden Teils 23 vorgesehen, so dass das in den Ringraum 25 befindliche Füllgut durch das Innere des rotierenden Teils 23 an die sich drehenden, nicht näher dargestellten Füllstationen weitergeleitet werden kann.

In ähnlicher Art wird über einen weiteren Anschluss 27 sterile Luft in einen ebenfalls im feststehenden und korrespondierend dazu rotierenden Teil angeordneten Ringraum 28 geleitet. Im rotierenden Teil 23 ist eine rohrförmige Durchführung 29 vorgesehen, die einerseits mit dem Ringraum 28 in Verbindung steht und andererseits mit einem Anschluss 30 im oberen Bereich des rotierenden Teils 3. Auf diese Weise kann auch die sterile Luft vom feststehenden an den rotierenden Teil der Anlage geleitet werden. Analog dazu wird über den Ringraum 31 eine weitere Flüssigkeit mittels nicht näher dargestellter Anschlüsse übertragen. Über die Anschlüsse 32 und 33 wird durch den Ringraum 34 und die Verbindungsleitung 35 eine weitere Flüssigkeit, z. B. ein Reinigungsschaum oder eine Reinigungslösung, geleitet.

Unter anderem zwischen jeweils zwei Ringräumen kommen nun die erfindungsgemäßen Dichtanordnungen zum Einsatz.

Zwischen dem Ringraum 25 und dem Ringraum 28 ist eine erste Dichtung 41 und eine zweite Dichtung 42 angeordnet, zwischen denen eine ringförmige Kammer 43 liegt. In dieser ringförmigen Kammer 43 befindet sich ein Barrieremedium aus 15 % H₂O₂-Lösung. Die Dichtungen 41 und 42 sind jeweils so ausgestaltet, dass sie ihre Hauptdichtwirkung gegenüber den benachbarten Ringräumen aufweisen und so verhindern, dass sich der Inhalt der beiden Ringräume vermischt. Auf gleiche Weise ist auch die Dichtanordnung 40 zwischen dem Ringraum 28 und dem Ringraum 31 aufgebaut.

Um die Sicherheit der Abdichtung zwischen den Räumen 31 und 34 zu erhöhen, ist hier die erfindungsgemäße Dichtanordnung dopelt ausgeführt. So sind zunächst zwei Dichtungen 44 vorgeehen, die in Richtung des Raumes 31 abdichten und zwischen denen eine Kammer 45 mit dem Barrieremedium vorgesehen ist. Am Ringraum 34 sind zwei Dichtungen 46 angeordnet, die in Richtung dieses Raumes dichten und zwischen denen ebenfalls eine Kammer 47 mit Barrieremedium vorgesehen ist. Zwischen diesen beiden Doppeldichtungsanordnungen befindet sich ein Leerraum 48, der über einen Zugang 49 zugänglich ist. Dies dient der Erhöhung der Sicherheit, da im Falle des Versagens einer der Dichtungen zunächst Teile des Barrieremediums ins Innere des Leerraumes 48 gelangen und durch die Zugänge 49 nach außen abgeführt werden. So ist die Fehlfunktion einer Dichtungsanordnung frühzeitig erkennbar, insbesondere also bevor eine Vermischung des Inhaltes der Ringräume 31 und 34 untereinander stattfinden kann.

Zur Abdichtung des Ringraumes 34 nach oben sind drei Dichtungen 50 vorgesehen, zwischen denen zwei Kammern 51 mit Barrieremedium 51 angeordnet sind. Analog dazu sind auf der Unterseite der Anordnungen drei Dichtungen 52 angeordnet, die ebenfalls zwei Kammern 53 mit Barrieremedium zwischen sich einschließen, so dass auch die Kammer 25 sicher abgedichtet ist.

Die Kammern 43, 45 und 53 sind jeweils miteinander über Leitungen 54 im rotierenden Teil 23 miteinander verbunden und über Anschlüsse 55, 56 von außen zugänglich. Über diese kann das Barrieremedium in die Kammern 43, 45, 53 eingebracht und aus diesen entnommen werden. Hierüber ist auch eine Drucksteuerung und Überwachung möglich, so dass beispielsweise ein Überdruck in den Kammern aufgebaut, gehalten und überwacht werden kann, um so die Dichtungssicherheit weiter zu erhöhen und gleichzeitig eine Detektion im Falle von Undichtigkeiten anhand des Druckabfalles einfach zu ermöglichen. Die Kammern 47 und 51 sind über eine getrennte Leitung 57 miteinander verbunden, die über Anschlüsse 58 und 59 zugänglich sind. So kann die Kammer 43 durch die Verwendung eines alternativen Barrieremediums mit ggf. unterschiedlichem Druck abgedichtet werden.

Natürlich ist die Erfindung nicht auf das vorstehende Ausführungsbeispiel beschränkt, sondern kann in vielfältiger Hinsicht abgewandelt werden, ohne den Grundgedanken zu verlassen. Insbesondere die Art und Ausführung der Kammeranschlüsse und der allgemeine Aufbau der Drehverteiler oder sonstigen Drehverbindungen, die mittels der erfindungsgemäßen Dichtanordnung abgedichtet werden, können in weiten Bereichen variiert werden. Auch die Abmessungen und verwendeten Materialien sind in weiten Bereichen variabel.

Des Weiteren ist in einer nicht erfindungsgemäßen Ausführung vorgesehen, eine Dichtanordnung für die dichtende Verbindung mindestens zweier, in Montageanordnung unbeweglich miteinander verbundener Elemente auszubilden, wobei mindestens eines dieser Elemente eine Leitung für ein Fluid aufweist.

Weiterhin ist vorgesehen, dass mindestens ein Dichtelement zur Abdichtung der Fluidleitung bzw. der Verbindungsstelle der mindestens zwei Elemente gegenüber der Umgebung angeordnet ist, wobei außerhalb des durch das Dichtelement definierten Innenraumes eine Kammer (7,43,45,47,51,53) zur Aufnahme austretenden Medium oder eines Barrieremediums angeordnet ist. Wie bereits zuvor beschrieben, kann durch diese Ausbildung die Funktion der Dichtungselemente durch eine Kontrolle der Kammer (7,43,45,47,51,53) zuverlässig und auf einfache Weise erreicht werden.

### Bezugszeichenliste

- 1: Drehlagervorrichtung
- 2: feststehender Teil
- 3: rotierender Teil
- 4: Dichtanordnung
- 5: erste Dichtung
- 6: zweite Dichtung
- 7: Kammer
- 8: Zufluss
- 9: Abfluss
- 10: Lager
- 20: Drehverteiler
- 21: Frontplatte
- 22: feststehender Teil
- 23: rotierender Teil
- 24: Anschluss
- 25: Ringraum
- 26: Mittelteil
- 27: Anschluss
- 28: Ringraum
- 29: Durchführung
- 30: Anschluss
- 31: Ringraum
- 32: Anschluss
- 33: Anschluss
- 34: Ringraum
- 35: Verbindungsleitung
- 40: Dichtanordnung
- 41: Dichtung
- 42: Dichtung
- 43: Kammer
- 44: Dichtungen
- 45: Kammer
- 46: Dichtungen
- 47: Kammer
- 48: Leerraum
- 49: Dichtungen
- 50: Dichtungen
- 51: Kammer
- 52: Dichtungen
- 53: Kammer
- 54: Leitungen
- 55: Anschluss
- 56: Anschluss
- 57: Leitung
- 58: Anschluss
- 59: Anschluss

## Patentansprüche

1. Drehverteiler als Drehlagervorrichtung mit einem feststehenden und einem rotierenden Teil, wobei zwischen dem feststehenden (2,22) und dem rotierenden (3,23) Teil wenigstens zwei Dichtanordnungen (40) angeordnet sind, welche je zwei voneinander beabstandete Dichtungen (5,6,41,42,44,46,50,52) umfassen, zwischen denen eine Kammer (7,43,45,47,51,53) zur Aufnahme eines Barrieremediums angeordnet ist, **dadurch gekennzeichnet, dass** die Kammern jeweils miteinander über Leitungen (54, 57) im rotierenden Teil (23) verbunden und über Anschlüsse (55, 56) von außen zugänglich sind.

2. Drehverteiler nach Anspruch 1, **dadurch gekennzeichnet, dass** die Kammer (7,43,45,47,51 ,53) im Wesentlichen ringförmig ausgebildet ist.

3. Drehverteiler nach Anspruch 1 oder 2, **dadurch gekennzeichnet, dass** die Kammer (7,43,45,47,51,53) wenigstens einen Zufluss (8,55,56,58,59) von außen aufweist.

4. Drehverteiler nach einem der vorangegangenen Ansprüche, **dadurch gekennzeichnet, dass** die Kammer (7,43,45,47,51,53) für eine Zirkulation des Barrieremediums ausgebildet ist.

5. Drehverteiler nach einem der vorangegangenen Ansprüche, **dadurch gekennzeichnet, dass** die Kammer (7,43,45,47,51,53) eine Drucküberwachung und/oder eine Füllstandsüberwachung aufweist.

6. Drehverteiler nach einem der vorangegangenen Ansprüche, **dadurch gekennzeichnet, dass** bei mehreren vorhandenen Dichtanordnungen (40) dazwischen ein Leerraum (48) vorgesehen ist.

7. Drehverteiler nach einem der vorangegangenen Ansprüche, **dadurch gekennzeichnet, dass** das Barrieremedium flüssig und/oder gasförmig ist.

8. Drehverteiler nach einem der vorangegangenen Ansprüche, **dadurch gekennzeichnet, dass** das Barrieremedium als eine Lösung eines Desinfektionsmittels vorgesehen ist.

9. Drehverteiler nach einem der vorangegangenen Ansprüche, **dadurch gekennzeichnet, dass** zwischen jeweils zwei vorgesehenen Ringräumen (25,28,31, 34) jeweils eine Dichtanordnung (40) vorgesehen ist.

## Claims

1. Rotary distributor as a pivot bearing device comprising a stationary and a rotary part, wherein at least two sealing arrangements (40) are disposed between the stationary (2, 22) and the rotary (3, 23) part, said sealing arrangements each comprising two interspaced seals (5, 6, 41, 42, 44, 46, 50, 52), and a chamber (7, 43, 45, 47, 51, 53), which is used to receive a barrier medium, is arranged between said two seals, **characterised in that** the chambers each are interconnected by pipes (54, 57) in the rotary part (23) and accessible from outside via connections (55, 56).

2. Rotary distributor according to claim 1, **characterised in that** the chamber (7, 43, 45, 47, 51, 53) substantially is of an annular design.

3. Rotary distributor according to claim 1 or 2, **characterised in that** the chamber (7, 43, 45, 47, 51, 53) has at least one inflow (8, 55, 56, 58, 59) from outside.

4. Rotary distributor according to any one of the preceding claims, **characterised in that** the chamber (7, 43, 45, 47, 51, 53) is designed for circulating the barrier medium.

5. Rotary distributor according to any one of the preceding claims, **characterised in that** the chamber (7, 43, 45, 47, 51, 53) has a pressure monitor and/or a level monitor.

6. Rotary distributor according to any one of the preceding claims, **characterised in that**, in case of a plurality of existing sealing arrangements (40), an empty space (48) is provided there between.

7. Rotary distributor according to any one of the preceding claims, **characterised in that** the barrier medium is liquid and/or gaseous.

8. Rotary distributor according to any one of the preceding claims, **characterised in that** the barrier medium is provided as a solution of a disinfectant.

9. Rotary distributor according to any one of the preceding claims, **characterised in that** a sealing arrangement (40) each is provided between any two annular spaces (25, 28, 31, 34) provided.

## Revendications

1. Distributeur rotatif sous forme de dispositif de palier rotatif avec une partie fixe et une partie rotative, au moins deux dispositifs de joint (40) étant disposés entre la partie fixe (2, 22) et la partie rotative (3, 23), lesquels comprennent chacun deux joints (5, 6, 41, 42, 44, 46, 50, 52) espacés l'un de l'autre, entre lesquels une chambre (7, 43, 45, 47, 51, 53) est disposée pour la réception d'un moyen barrière, **caractérisé en ce que** les chambres sont respectivement reliées entre elles par des conduites (54, 57) dans la partie rotative (23) et sont accessibles de l'extérieur par des raccordements (55, 56).

2. Distributeur rotatif selon la revendication 1, **caractérisé en ce que** la chambre (7, 43, 45, 47, 51, 53) est réalisée sensiblement en forme d'anneau.

3. Distributeur rotatif selon la revendication 1 ou 2, **caractérisé en ce que** la chambre (7, 43, 45, 47, 51, 53) présente au moins une amenée (8, 55, 56, 58, 59) de l'extérieur.

4. Distributeur rotatif selon l'une quelconque des revendications précédentes, **caractérisé en ce que** la chambre (7, 43, 45, 47, 51, 53) est réalisée pour une circulation du moyen barrière.

5. Distributeur rotatif selon l'une quelconque des revendications précédentes, **caractérisé en ce que** la chambre (7, 43, 45, 47, 51, 53) présente une surveillance de pression et/ou une surveillance de niveau.

6. Distributeur rotatif selon l'une quelconque des revendications précédentes, **caractérisé en ce qu'**en présence de plusieurs dispositifs de joint (40), un espace vide (48) est prévu au milieu.

7. Distributeur rotatif selon l'une quelconque des revendications précédentes, **caractérisé en ce que** le moyen barrière est liquide et/ou gazeux.

8. Distributeur rotatif selon l'une quelconque des revendications précédentes, **caractérisé en ce que** le moyen barrière est prévu sous forme de solution d'un agent désinfectant.

9. Distributeur rotatif selon l'une quelconque des revendications précédentes, **caractérisé en ce que** respectivement un dispositif de joint (40) est prévu entre respectivement deux espaces annulaires prévus (25, 28, 31, 34).
